# EUROPÄISCHE PATENTANMELDUNG

(11) **EP 1 407 669 A2**
(43) Veröffentlichungstag der Anmeldung: **14.04.2004**
(21) Anmeldenummer: 03020032.3
(22) Anmeldetag: 04.09.2003
(51) Int. Cl.: A22C 11/02

(54) **Verfahren und Vorrichtung zum Abfüllen von Lebensmittel in Därme**

(30) Priorität: 10.10.2002 DE 10247230
(71) Anmelder: Schröder Maschinenbau KG, 33824 Werther (DE)
(72) Erfinder: Schröder, Helmut, 33824 Werther (DE)
(74) Vertreter: TER MEER STEINMEISTER & PARTNER GbR

(57) **Zusammenfassung**

Verfahren zum Abfüllen von Lebensmittel in Därme, bei dem der Darm (22) in der Form eines endlosen Schlauches auf ein Füllrohr (20) aufgeschoben wird, die Lebensmittel als Strang (26) durch das Füllrohr (20) in den Darm (22) ausgepreßt werden und der gefüllte Darm in Intervallen durchtrennt und an den Enden geschlossen wird, so daß wurstförmige Endprodukte (10) entstehen, dadurch **gekennzeichnet,** daß der Strang (26) im Füllrohr (20) an den Stellen vorgeschnitten wird, an denen später der Darm (22) durchtrennt wird.

## Beschreibung

Die Erfindung betrifft ein Verfahren zum Abfüllen von Lebensmitteln in Därme, bei dem der Darm in Form eines endlosen Schlauches auf ein Füllrohr aufgeschoben wird, die Lebensmittel als Strang durch das Füllrohr in den Darm ausgepreßt werden und der gefüllte Darm in Intervallen durchtrennt und an den Enden geschlossen wird, so daß wurstförmige Endprodukte entstehen, sowie eine Vorrichtung zur Durchführung dieses Verfahrens.

Verfahren und Vorrichtungen dieser Art (siehe z.B. Firmenprospekt "Einziehpresse HAMAX 800" der Maschinenbau Schröder KG) werden nicht nur zur Herstellung von Würsten aus fein zerkleinerten Fleischwaren eingesetzt, sondern auch zur Herstellung von Fleichprodukten, bei denen größere zusammenhängende Fleischstücke, z. B. Schinkenlachse, in den Darm abgefüllt werden. Zum Durchtrennen des Darms und zum Verschließen der Darmenden sind sogenannte Clip-Automaten bekannt, die den gefüllten Darm an der vorgesehenen Trennstelle abquetschen, zwei Metallclips auf den eingeschnürten Darm aufpressen und dann den Darm zwischen den beiden Metallclips durchschneiden, so daß zwei geschlosse Darmenden gebildet werden. Beim Verarbeiten von bestimmten Lebensmitteln, beispielsweise bei Lachsschinken, besteht jedoch das Problem, daß die einzelnen Faserbündel des Muskelfleisches von einer dünnen, aber reiß- und schnittfesten Haut, der sogenannten Silberhaut, umgeben sind, die sich im Clip-Automaten nur schwer durchtrennen läßt. Beim Abquetschen des gefüllten Darms kann es häufig vorkommen, daß ein oder mehrere Stücke einer solchen Silberhaut die Abquetschstelle durchziehen und beim Durchtrennen des Darms nicht vollständig durchtrennt werden, so daß die Endprodukte auch nach dem Verlassen des Clip-Automaten noch zusammenhängen. Hierdurch kommt es zu erheblichen Störungen im Produktionsablauf. Vergleichbare Probleme treten auch beim Verarbeiten von Lebensmitteln auf, die Sehnen oder andere schwer durchtrennbare Filamente enthalten.

Aufgabe der Erfindung ist es deshalb, ein Verfahren und eine Vorrichtung anzugeben, mit denen es möglich ist, auch schwer durchtrennbare Lebensmittel in Därme abzufüllen, ohne daß es zu Funktionsstörungen im Clip-Automaten kommt.

Diese Aufgabe wird bei einem Verfahren der Eingangs genannten Art dadurch gelöst, daß der Strang im Füllrohr an den Stellen vorgeschnitten wird, an denen später der Darm durchtrennt wird. Eine Vorrichtung zur Durchführung dieses Verfahrens ist Gegenstand des unabhängigen Vorrichtungsanspruchs.

Da der Lebensmittelstrang beim Vorschneiden noch nicht von dem Darm umgeben ist und noch einen wesentlich größeren Querschnitt hat als später an der Abquetsch-Stelle im Clip-Automaten, lassen sich Silberhäute, Sehnen und ähnliche Filamente beim Vorschneiden mit Hilfe eines geeigneten Messers sauber durchtrennen, ohne daß eine übermäßige Schnittkraft aufgewandt zu werden braucht. Da bei der Gestaltung der Vorschneideinrichtung auch nicht die konstruktiven Beschränkungen bestehen, die sich beim Clip-Automaten aus der Notwendigkeit ergeben, in unmittelbarer Nähe der Schnittstelle auch die Metallclips aufzuquetschen, läßt sich der Vorschneidvorgang so gestalten, daß die zähen Filamente sicher durchtrennt werden. Dabei kann z. B. auch ein ziehender Schnitt ausgeführt oder ein rotierendes Schneidemesser verwendet werden. Die Schneidposition und/oder der Zeitpunkt des Vorschneidvorgangs wird so auf den Takt des Clip-Automaten abgestimmt, daß sich, nachdem der Lebensmittelstrang weiter durch das Füllrohr ausgepresst wurde, die vorgeschnittenen Stellen jeweils an der Position befinden, an der der endgültige Trennvorgang mit Hilfe des Clip-Automaten ausgeführt wird. Da dann die Sehnen, Silberhäute und dergleichen bereits durchtrennt sind, braucht mit Hilfe des Clip-Automaten im wesentlichen nur noch der Darm durchtrennt zu werden, so daß auch beim Einsatz gebräuchlicher Clip-Automaten wesentliche seltener Funktionsstörungen auftreten.

Vorteilhafte Weiterbildungen und Ausgestaltungen der Erfindung sind in den Unteransprüchen angegeben.

Bevorzugt arbeitet die Vorschneideinrichtung synchron mit dem Clip-Automaten oder einer vergleichbaren Trenn- und Verschlußeinrichtung. Während des mit Hilfe des Clip-Automaten durchgeführten Trennvorgangs wird üblicherweise die Funktion der Füllpresse, mit der die Lebensmittel durch das Füllrohr ausgepresst werden, vorübergehend unterbrochen. Auch beim Vorschneidvorgang sollte der Vortrieb des Stranges unterbrochen werden. Wenn der Trenn- und der Vorschneidvorgang zeitgleich ausgeführt werden, läßt sich dies ohne Zeitverlust und somit ohne Abnahme der Produktivität erreichen.

Da die in den Darm abzufüllenden Lebensmittelprodukte im wesentlichen inkompressibel sind, ihr Volumen bei dem Abfüllvorgang also im wesentlichen konstant bleibt, ist es zweckmäßig, die Position der Vorschneideinrichtung so zu wählen, daß das Volumen des Lebensmittelstranges zwischen der Vorschneideinrichtung und der Trenn- und Verschlußeinrichtung gleich dem Volumen des Endproduktes oder einem ganzzahligen Vielfachen davon ist. Dadurch ist sichergestellt, daß die Trenn- und Verschlußeinrichtung in jedem Arbeitstakt gerade an der Stelle wirksam wird, an der vorher mit der Vorschneideinrichtung der Strang durchgetrennt wurde.

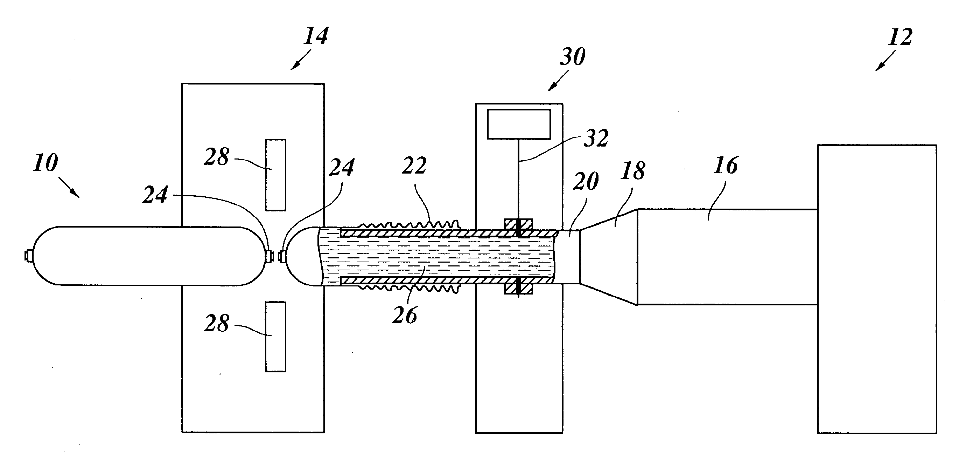

Im folgenden wird ein Ausführungsbeispiel der Erfindung anhand der Zeichnung näher erläutert.

Die einzige Zeichnungsfigur zeigt eine schematische, teilweise aufgeschnittene Seitenansicht der erfindungsgemäßen Vorrichtung.

Die in der Zeichnung dargestellte Vorrichtung dient dazu, Lebensmittelprodukte, beispielsweise Schinkenlachse, in Därme abzufüllen, so daß wurstförmig Endprodukte 10 entstehen. Zu dessen Zweck umfaßt die Vorrichtung eine Füllpresse 12 und eine Trenn- und Verschlußeinrichtung, die im folgenden als Clip-Automat 14 bezeichnet werden soll. Der Aufbau und die Wirkungsweise dieser Komponenten sind als solche bekannt und werden deshalb hier nicht im einzelnen beschrieben.

Die Füllpresse 12 weist einen Zylinder 16 auf, der über ein konisches Übergangsstück 18 in ein Füllrohr 20 mündet, dessen Querschnitt bereits im wesentlichen mit dem Querschnitt der Endprodukte 10 übereinstimmt. Auf das Füllrohr 20 ist ein Darm 22 in der Form eines endlosen Schlauches gerafft aufgeschoben. Das freie Ende des Darmes ist mit Hilfe des Clip-Automaten 14 durch einen Metallclip 24 verschlossen worden.

In diesem Zustand wird die Füllpresse 12 in Betrieb gesetzt. Die Schinkenlachse werden im Zylinder 16 komprimiert und im Übergangsstück 18 auf den Querschnitt des Füllrohres 20 verdichtet und dann als Strang 26 durch das Füllrohr in den Darm ausgepreßt. Dabei bewegt sich das durch den Metallclip 24 verschlossene Ende des Darmes in der Zeichnung nach links, und der Darm 22 wird vom Füllrohr abgezogen. Dieser Vorgang wird so lange fortgesetzt, bis der mit dem Strang 26 gefüllte Abschnitt des Darms die gewünschte Länge des Endprodukts 10 erreicht hat. Danach wird die Füllpresse 12 angehalten, und zwei Werkzeuge 28 des Clip-Automaten 14 werden zusammengefahren, um den gefüllten Darm einzuschnüren. An der Einschnürungsstelle werden dann mit Hilfe der Werkzeuge 28 zwei Metallclips 24 auf den Darm aufgequetscht, und im Zwischenraum zwischen den beiden Metallclips wird der Darm durchtrennt. Anschließend werden die Werkzeuge 28 wieder auseinandergefahren, so daß ein neuer Zyklus beginnen kann.

Die Besonderheit der hier beschriebenen Vorrichtung besteht darin, daß an dem Füllrohr 20 stromaufwärts des Darmes 22 eine Vorschneideinrichtung 30 zum Vorschneiden des Stranges 26 angeordnet ist. Die Vorschneideinrichtung weist ein Schneidmesser 32 auf, das in das an dieser Stelle durch einen Schlitz unterbrochene Füllrohr 20 eintauchen kann, um den Strang 26 auf seinem gesamten Querschnitt zu durchtrennen. Dieser Vorschneidvorgang findet jeweils zu den Zeitpunkten statt, an denen der Betrieb der Füllpresse 12 unterbrochen ist und auch die Werkzeuge 28 des Clip-Automaten 14 zusammengefahren werden, um den Darm zu durchtrennen.

Die Position der Vorscheideinrichtung 30 ist so gewählt, daß das Volumen des Stranges 26 in dem Abschnitt zwischen dem durch den Metallclip 24 verschlossenen Ende des Darmes und der Position des Schneidmessers 32 mit dem Volumen des Endprodukts 10 übereinstimmt. Beim nächsten Arbeitstakt der Vorschneideinrichtung 30 und des Clip-Automaten 14 befindet sich daher der mit dem Schneidmesser 32 durchtrennte Abschnitt des Stranges 26 gerade an der Stelle der Werkzeuge 28 des Clip-Automaten. Wenn der Strang 26 Silberhäute, Sehnen oder andere Filamente enthält, die mit den Werkzeugen 28 schwer zu durchtrennen wären, sind diese bereits bei dem Vorschneidvorgang durchtrennt worden, so daß mit den Werkzeugen 28 nur noch der Darm 22 durchtrennt zu werden braucht. Geringfügige Positionsabweichungen zwischen den Schnittstellen der Silberhäute, Sehnen etc. und der Trennstelle, an der der Darm durchtrennt wird, können dabei toleriert werden und haben allenfalls zur Folge, daß ein sehr kurzer Endabschnitt der Silberhaut aus dem Metallclip 24 herausragt.

Die Endprodukte 10 werden somit im Clip-Automaten 14 vollständig voneinander getrennt, so daß ein zuverlässiger und stabiler Betrieb der Vorrichtung möglich ist.

## Patentansprüche

1. Verfahren zum Abfüllen von Lebensmitteln in Därme, bei dem der Darm (22) in der Form eines endlosen Schlauches auf ein Füllrohr (20) aufgeschoben wird, die Lebensmittel als Strang (26) durch das Füllrohr (20) in den Darm (22) ausgepreßt werden und der gefüllte Darm in Intervallen durchtrennt und an den Enden geschlossen wird, so daß wurstförmige Endprodukte (10) entstehen, **dadurch gekennzeichnet, daß** der Strang (26) im Füllrohr (20) an den Stellen vorgeschnitten wird, an denen später der Darm (22) durchtrennt wird.

2. Verfahren nach Anspruch 1, **dadurch gekennzeichnet, daß** der Strang (26) taktweise durch das Füllrohr (20) gepreßt wird und das Durchtrennen des Darms (22) und das Vorschneiden des Stranges (26) etwa zeitgleich in den Phasen erfolgen, in denen der Pressvorgang unterbrochen ist.

3. Vorrichtung zum Abfüllen von Lebensmitteln in Därme, mit einer Füllpresse (12) zum Auspressen der Lebensmittel in der Form eines Stranges (26) durch ein Füllrohr (20), das von einem am Ende geschlossenen Darm (22) umgeben ist, und mit einer Trenn- und Verschlußeinrichtung (14) zum taktweisen Durchtrennen des mit dem Strang (26) gefüllten Darmes (22) und zum Verschließen der Darmenden, **dadurch gekennzeichnet, daß** am Füllrohr (20) stromaufwärts des Darmes (22) eine Vorschneideinrichtung (30) zum Vorschneiden des in dem Füllrohr enthaltenen Stranges (26) angeordnet ist.

4. Vorrichtung nach Anspruch 3, **dadurch gekennzeichnet, daß** die Vorschneideinrichtung (30) in einer solchen Axialposition am Füllrohr (20) angeordnet ist, daß das Volumen des Stranges (26) zwischen dem geschlossenen Darmende und der Vorschneideinrichtung (30) das n-fache des Volumens eines Endprodukts (10) beträgt, das zwischen zwei aufeinanderfolgenden Arbeitstakten der Trenn- und Verschlußeinrichtung (14) gebildet wird, wobei n eine ganze Zahl größer oder gleich 1 ist.
